# EUROPÄISCHE PATENTANMELDUNG

(11) **EP 2 522 604 A1**
(43) Veröffentlichungstag der Anmeldung: **14.11.2012**
(21) Anmeldenummer: 12000321.5
(22) Anmeldetag: 19.01.2012
(51) Int. Cl.: B65G 47/84

(54) **Verfahren zur Übergabe von kleinstückigen Produkten und Entnahmeeinrichtung sowie Verpackungsmaschine mit einer derartigen Entnahmeeinrichtung**

(30) Priorität: 11.05.2011 DE 102011101200
(71) Anmelder: THEEGARTEN-PACTEC GMBH & CO. KG, 01237 Dresden (DE)
(72) Erfinder: Oehlert, Volker, 01809 Dohna/Röhrsdorf (DE); Neubert, Dirk, 01796 Dohna (DE); Dietrich, Mike, 01157 Dresden (DE)
(74) Vertreter: Grünecker, Kinkeldey, Stockmair & Schwanhäusser

(57) **Zusammenfassung**

Die Erfindung betrifft ein Verfahren zur Übergabe von kleinstückigen Produkten (P), insbesondere von kleinstückigen Süßwaren, auf eine Bandfördereinrichtung (11) einer Verpackungsmaschine, sowie eine entsprechende Entnahmeeinrichtung (7). An der Entnahmeeinrichtung (7)sind schwenkbare Mitnehmer (10) vorgesehen, die die Produkte (P) aufnehmen und an die Bandfördereinrichtung (11) weitergeben. Außerdem ist eine Abgabeband der Bandfördereinrichtung mit einer Umlenkkante im Bereich des Abgabekopfes (9) vorgesehen.

## Beschreibung

Die Erfindung betrifft ein Verfahren zur Übergabe von kleinstückigen Produkten, insbesondere von kleinstückigen Süßwaren, auf eine Bandfördereinrichtung einer Verpackungsmaschine sowie auf eine Entnahmeeinrichtung für kleinstückige Produkte, insbesondere stromab eines Packkopfes einer Verpackungsmaschine und auf eine entsprechende Verpackungsmaschine.

Im Bereich der Verpackung von kleinstückigen Süßwaren werden hohe Anforderungen an die Flexibilität der Verpackungsmaschinen gestellt. Sowohl bedingt durch die verschiedenen Produkttypen mit ihren unterschiedlichen Abmessungen als auch bedingt durch die verschiedenen Einschlagarten mit denen solche Produkte verpackt werden können, müssen die mit den Süßwaren interagierenden Handhabungsmodule der Verpackungsmaschine möglichst ohne oder nur mit einfachen Maßnahmen eine störungsfreie Weiterverarbeitung auch nach einem Produktwechsel erlauben.

Verpackungsmaschinen für kleinstückige Süßwaren verfügen bekanntermaßen über verschiedene modulare Aggregate, mit denen verschiedene Aufgaben im Ablauf des Verpackungsprozesses erfüllt werden.

Die Verpackung des Produktes wird hierbei von einem Packkopf in einer vorgebbaren Einschlagart wie Falteinschlag, Doppeldreheinschlag oder in einseitigem Dreheinschlag komplettiert, wobei der Packkopf um eine zentrale Rotationsachse rotiert. Aus diesem Packkopf wird das fertig verpackte Produkt anschließend mittels einer Greifeinheit einer ebenfalls drehbaren Entnahmeeinheit entnommen und schließlich an eine Produktabgabeeinheit (im Weiteren als Entnahmeeinrichtung bezeichnet) übergeben, in der das Produkt schließlich auf einem Abgabeband einer Bandfördereinrichtung abgelegt wird.

Die produktschonende Aufgabe des (verpackten) Produktes auf das Abgabeband ist problematisch (jedenfalls schwierig, eine präzise Orientierung einzuhalten). Entweder werden die Produkte häufig ungeordnet abgelegt oder besteht die Gefahr von Beschädigungen von Verpackung und/oder Produkt.

Der Erfindung liegt daher die Aufgabe zugrunde, ein Verfahren zur Übergabe von kleinstückigen Artikeln auf eine Bandfördereinrichtung sowie eine Entnahmeeinrichtung für kleinstückige Produkte einer Verpackungsmaschine und eine Verpackungsmaschine mit einer derartigen Entnahmeeinrichtung anzugeben, die sich durch eine besonders produktschonende Übergabe der Produkte auf eine Bandfördereinrichtung zum geordneten Abtransport derselben aus einer Verpackungsmaschine auszeichnet.

Diese Aufgabe wird erfindungsgemäß durch ein Verfahren nach Patentanspruch 1 gelöst, ferner durch eine Entnahmeeinrichtung nach Patentanspruch 5 sowie durch eine Verpackungsmaschine gemäß Patentanspruch 14.

Nach einem ersten, wesentlichen Aspekt der vorliegenden Erfindung erfolgt die Übergabe der Produkte von schwenkbaren Mitnehmern des Abgabekopfes auf die Bandfördereinrichtung bzw. ein Abgabeband derselben, und zwar vorzugsweise von oben her im Wesentlichen mit einer Horizontalgeschwindigkeit der Mitnehmer, die der Fördergeschwindigkeit des Abgabebandes Bandfördereinrichtung entspricht. Die Schwenkbarkeit der Mitnehmer sichert ein Lösen der Mitnehmer aus dem Kontakt mit dem Produkt praktisch gleichzeitig an allen Stellen bei leichter Verzögerung der Horizontalgeschwindigkeit der Mitnehmer, so dass kein Druck von rückwärts auf die Produkte bei der Übergabe auf die Bandfördereinrichtung bzw. das Abgabeband desselben ausgeübt wird. Die Schwenkbewegung der Mitnehmer wird durch entsprechende Kurvensteuerungen der Schwenkwellen, mit denen die Mitnehmer jeweils drehfest sind, bewirkt. Ein gewünschtes Bewegungsprofil lässt sich auch für die hinsichtlich ihres Geschwindigkeitsbetrages beschleunigten Bewegungen der Mitnehmer durch stationäre Steuerkurven der Verpackungsmaschine leicht einrichten.

Nach einem weiteren, auch unabhängig von der Schwenkbeweglichkeit der Mitnehmer wesentlichen, zweiten Aspekt der Erfindung ragt ein Abgabeband mit einer Messerkante (Umlaufkante) unter spitzwinkliger Bandführung bis in den Abgabekopf, insbesondere bis zu oder sogar über eine 12-Uhr-Position der schwenkbeweglichen Mitnehmer am Abgabekopf, so dass eine sehr schonende Produktübergabe von dem Mitnehmer auf das Abgabeband bei großer Gestaltungsfreiheit des Übergabebereiches und der Steuerung der von Bandfördereinrichtung (Abgabeband) und Abgabekopf möglich ist.

Weitere, bevorzugte Ausgestaltungen der Erfindung sind Gegenstand der Unteransprüche und der nachfolgenden Erläuterungen eines bevorzugten Ausführungsbeispieles der Erfindung.

Die Erfindung wird nachstehend anhand eines bevorzugten Ausführungsbeispieles der Erfindung und zugehöriger Zeichnungen näher erläutert. In diesen zeigen:
- Fig. 1: eine perspektivische Teilansicht (schematisch) einer Verpackungsmaschine mit einer Entnahmeeinrichtung für die Produkte und Übergabe auf eine Bandfördereinrichtung,
- Fig. 2: eine vergrößerte perspektivische Teilansicht der Verpackungsmaschine gemäß Fig. 1 im Bereich der Entnahmeeinrichtung (schematisch),
- Fig. 3 bis 10:: Vorderansichten der Entnahmeeinrichtung in verschiedenen Phasen des Verfahrens der Übergabe eines kleinstückigen Produktes von einer Entnahmeeinrichtung an einen Abgabekopf der Entnahmeeinrichtung und durch diesen auf ein Abgabeband einer Bandfördereinrichtung, jeweils in schematischer Darstellung, wobei Fig. 3 ein Produkt P in einer Bereitschaftsstellung vor Übergabe an den Abgabekopf und ein Produkt P auf einem Abgabeband einer Bandfördereinrichtung zeigt, auf die es gerade abgesetzt wurde; dabei zeigen:
- Fig. 4: eine Übergabe des Produktes P von der Bereitstellung durch eine Entnahmeeinrichtung, die die Produkte von dem Packkopf an den Abgabekopf übergibt (schematisch),
- Fig. 5: eine Phase des Transportes des von der Entnahmeeinrichtung aufgenommenen Produktes P durch den Abgabekopf (schematisch),
- Fig. 6: eine weitere Phase der Übergabe des Produktes P auf ein Abgabeband der Bandfördereinrichtung, wobei sich das Produkt P in seiner höchsten Position (12-Uhr-Position) befindet, kurz vor Abgabe an die Bandfördereinrichtung (Abgabeband),
- Fig. 7: eine Phase der Übergabe des Produktes, bei der das Produkt P gerade auf das Abgabeband der Bandfördereinrichtung abgesetzt worden ist (und ein neues Produkt P sich in der Bereitschaftsposition zur Übergabe an den Packkopf befindet) (die Darstellung entspricht derjenigen von Fig. 3),
- Fig. 8 bis 10: weitere Phasen zunehmender Trennung des Mitnehmers vom Produkt P im Zuge der weiteren Rotation des Abgabekopfes und der Schwenkbewegung des Mitnehmers.

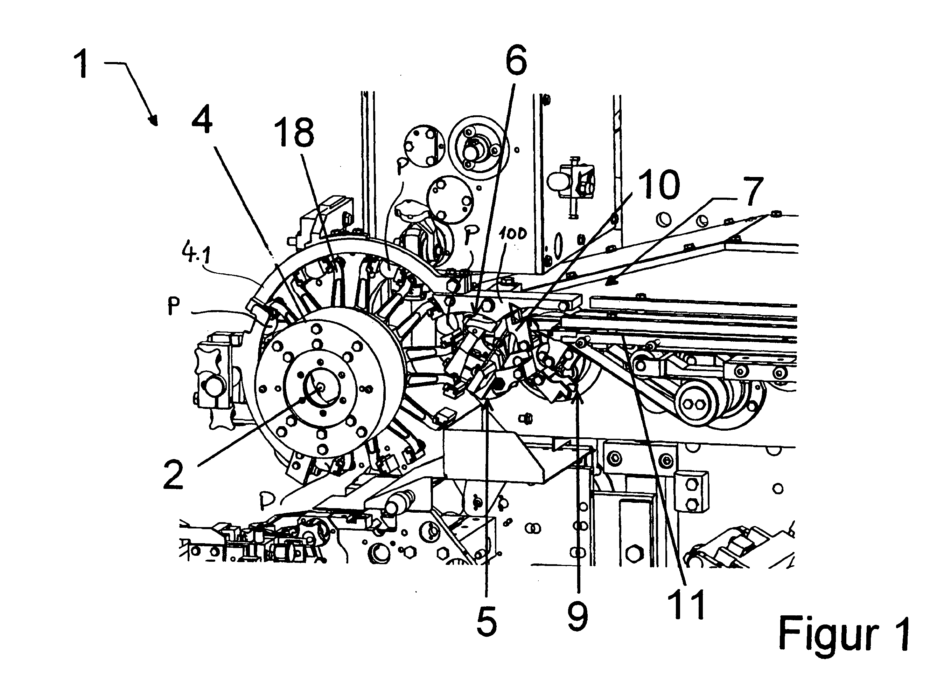

Figur 1 zeigt eine schematische Detailansicht einer Verpackungsmaschine 1 in ihrem für die vorliegende Erfindung wesentlichen Abschnitt. Die Verpackungsmaschine 1 für kleinstückige Artikel verfügt über einen Packkopf 4, der um eine zentrale Rotationsachse 2 rotierbar gelagert ist und von der nach außen mehrere Packkopfgreifer 18 ragen, die die Produkte P halten und in Verbindung mit dem Packstoff fertig verpacken. Ein zugehöriger Faltbogen ist mit 4.1 bezeichnet. Durch einen an den jeweiligen Einschlagtyp angepasstes Verpackungsregime werden die Produkte P verpackt (eingeschlagen). Nach Fertigstellung der Verpackung werden die verpackten Produkte P, z.B. Karamellen oder Schokoladenstücke aus dem Packkopf 4 mittels einer ebenfalls drehbar gelagerten Greifeinheit 6 entnommen und an die Entnahmeeinrichtung 7 übergeben.

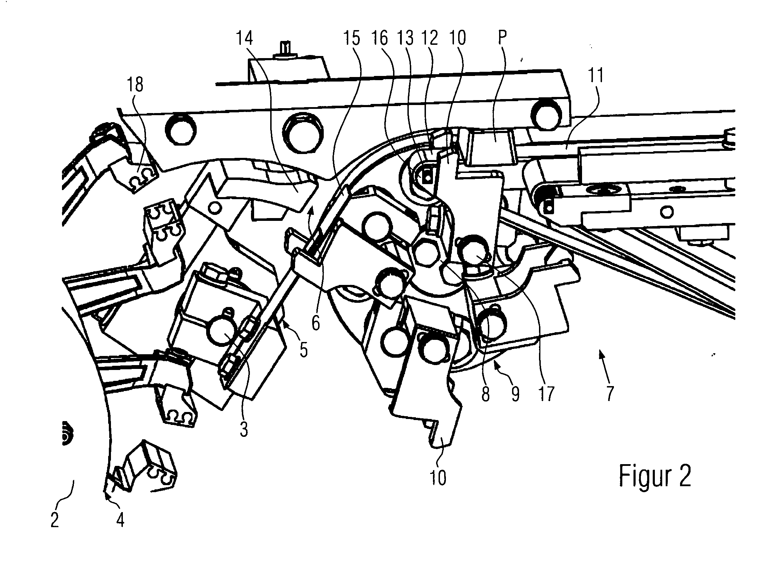

Aus Figur 2 wird der Einzelaufbau dieser erfindungsgemäßen Entnahmeeinrichtung 7 durch eine entsprechend vergrößerte Detailansicht für den Betrachter deutlich. Grundsätzlich ist diese Entnahmeeinrichtung 7 aus zwei voneinander unabhängigen Einzelkomponenten 9, 11 aufgebaut: einem ebenfalls auf einer zentralen Rotationsachse 8 drehbar gelagerten Abgabekopf 9, der in Form einer Radscheibe gestaltet ist und in dem in Umfangsrichtung gleichmäßig beabstandet vier Mitnehmer 10, auf Schwenkwellen 17 drehfest, schwenkbar gelagert sind und einem Abgabeband 11 einer Bandfördereinrichtung 110 um die verpackten Produkte P aus der Verpackungsmaschine 1 herauszufördern.

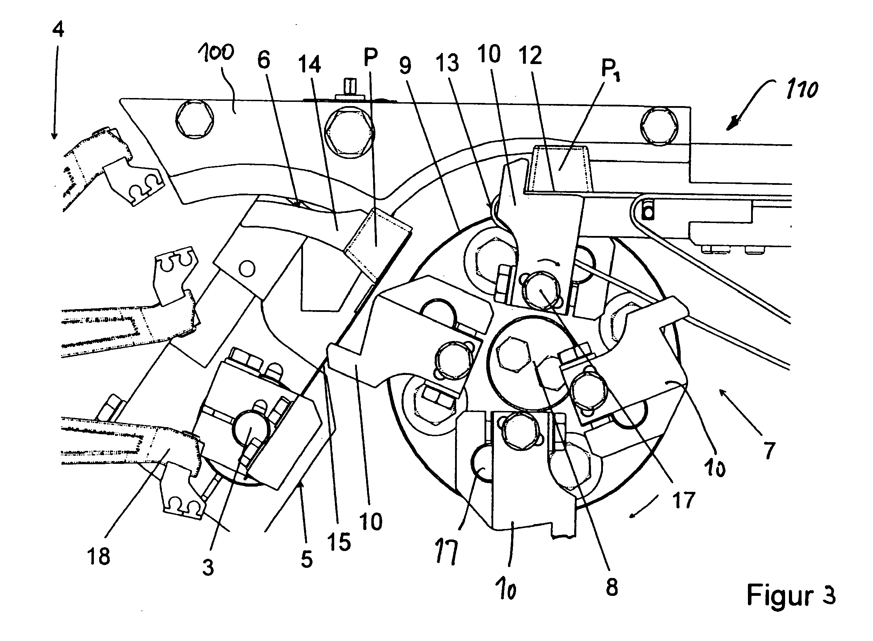

Die Mitnehmer 10 weisen beabstandete Produktaufnahmeabschnitte 10a, 10b auf, die durch eine U-förmige Konfiguration des Mitnehmers 10 gebildet sind. Die Mitnehmer 10 können einteilig sein, sind aber hier aus Fertigungsgründen zweiteilig aufgebaut, wobei der innere, den Produktaufnahmeabschnitt 10a bildende Mitnehmerabschnitt auf einer Schwenkwelle 17 klemmbefestigt ist und mit dieser am Abgabekopf 9 schwenkbar gelagert ist, während der andere Produktaufnahmeabschnitt 10b desselben Mitnehmers 10 mit dem, den ersten Produktaufnahmeabschnitt 10a bildenden Abschnitt mit einer Schraube 17a verschraubt ist. Die Produkte P werden von einer Greifeinheit 6, die um eine Schwenkachse 3 eines Entnahmekopfes 5 zwischen Packkopf 4 und Abgabekopf 9 schwenkbar ist und einen starren, L-förmigen Entnahmehebels 14 und einem opponierenden, flexiblen und als Federhebel ausgebildeten Entnahmehebel 15 aufweist, aus den Packkopfgreiferbacken 18 aufgenommen und in eine in Figur 3 dargestellte Bereitschaftsposition gehalten. Dort werden sie durch die Mitnehmer 10 des Abgabekopfes aufgenommen.

Die Produktaufnahmeabschnitte 10a, 10b der Mitnehmer 10 sind jeweils zwei Seitenteile, die an einer Stirnseite der den Abgabekopf 9 bildenden Radscheibe direkt oder indirekt mittels der Schwenkwelle 17 schwenkbar gelagert. Diese Mitnehmer 10 weisen winkelförmige Abschnitte, einen Bodenstützabschnitt 10c und einen Seitenstützabschnitt 10d auf, die als Auflage für ein verpacktes Produkt P dienen, um bei Drehung des Abgabekopfes 9 in Uhrzeigerrichtung zunächst das Produkt P aus der Greifeinheit 6 zu entnehmen und dann schließlich auf das Abgabeband 11 abzulegen. Der Abstand der durch die Produktaufnahmeabschnitte 10a, 10b gebildeten Schenkel der Mitnehmer 10 ist dabei derart an die Dimensionen der vorgeschalteten Greifeinheit 6 und die Breite des weiter zu transportierenden Produktes P angepasst, dass die Greifeinheit 6 zur Übergabe des Produktes P zwischen den Schenkeln des Mitnehmers 10 Platz findet, und zum anderen das Produkt P von Oberkanten der Produktaufnahmeabschnitte 10a, 10b der Mitnehmer 10 gehalten und zum Abgabeband 11 transportiert werden kann, wobei das Abgabeband 11 ebenfalls zwischen den Schenkeln (Produktaufnahmeabschnitten 10a, 10b) des Mitnehmers angeordnet ist, wenn ein Produkt P von einem Mitnehmer 10 auf dem Abgabeband 11 abgelegt wird.

Vorliegend ist die Bandfördereinrichtung 110 mehrteilig und ragt das Abgabeband 11 als mittleres Band am weitesten in den Abgabekopf 9 hinein (bis zu oder sogar über die "12-Uhr-Position" der Mitnehmer 10), um eine störungsfreie Produktaufnahme zu sichern. Seitenbänder 11A, 11 B dienen stromab zur Unterstützung des aufgelegten Produktes P. Abgabeband 11 und Seitenbänder 11A und 11 B laufen mit der gleichen Geschwindigkeit.

Sowohl das Abgabeband 11 als auch - weiter stromab - die Seitenbänder 11A, 11 B sind im spitzen Winkel über eine Leitrolle 16 und Bildung einer Umlenk- oder Messerkante geführt, so dass eine größere Gestaltungsfreiheit für die Produktübergabe besteht.

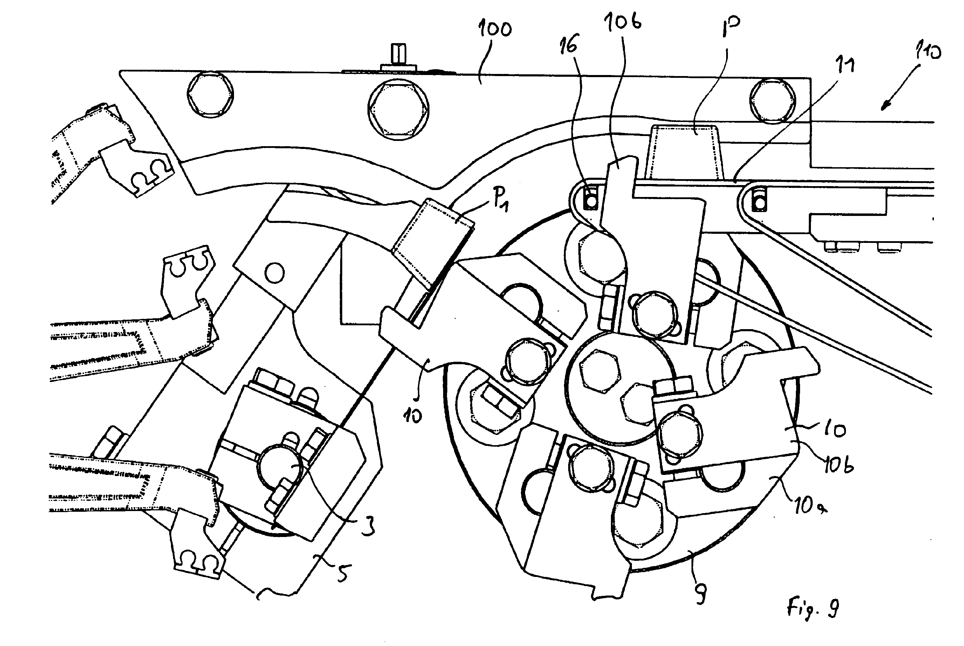

Anhand der nachfolgenden Bewegungsphasedarstellungen der Figuren 3 bis 9 werden sowohl die Besonderheiten des Verfahrens zur Übergabe von Produkten aus der Greifeinheit 6 an das Abgabeband 11 der Bandfördereinrichtung 110 erläutert und auch die hierfür getroffenen vorrichtungstechnischen Maßnahmen, insbesondere in der Ausgestaltung des Abgabekopfes 9 und der schwenkbar an diesem gelagerten Mitnehmer 10.

Ein Produkt P befindet sich in der Greifeinheit 6 in Bereitschaftsposition gehalten von einem starren, L-förmigen Entnahmehebel 14 und einem mit diesem opponierende zusammenwirkenden, flexiblen und als Federzunge ausgestalteten Entnahmehebel 15.

Nach Verschwenkung um die Schwenkachse 3 der Entnahmeeinheit 5 und Aufnahme des Produktes P aus den Greiferbacken 18 des noch teilweise gezeigten Packkopfes 4 ist die Greifeinheit 6 in diese Position geschwenkt, in der das Produkt durch den im Uhrzeigersinn umlaufenden Mitnehmer 10 des Abgabekopfes 9 aufgenommen werden kann. Zugleich zeigt die Figur 3 gerade den Zustand, in dem ein vorauslaufendes Produkt P1 auf dem Abgabeband 11 durch den in Figur 3 oberen Mitnehmer 10 abgesetzt worden ist, wobei sich der Mitnehmer 10 durch Überlagerung seiner Schwenkbewegung um seine Achse 17 einerseits (in Fig. 3 verdeckt) und Rotationsbewegung des Abgabekopfes 9 um die zentrale Rotationsachse 8 gerade praktisch gleichzeitig von jedem Kontakt (auch rückseitig) von dem Produkt P1 gelöst hat, so dass diese äußerst schonend auf das Abgabeband 11 der Bandfördereinrichtung 110 abgesetzt worden ist.

Das Abgabeband 11 ist wie die Greifeinheit 6 in der Breitenabmessung so begrenzt, dass bei Drehung des Abgabekopfes 9 dieses genau zwischen die Produktaufnahmeabschnitte 10a, 10b des Mitnehmers 10 passt, so dass die Produktaufnahmeabschnitte 10a, 10b (auch Seitenteile oder Schenkel) des Mitnehmers sich seitlich am Abgabeband 11 weiter vorbei drehen können bzw. eine ungestörte Aufnahme des Produktes P aus der Bereitschaftsposition durch Ablage auf den winkelförmigen Abschnitten (Bodenstützabschnitt 10c und Seitenstützabschnitt 10d) von der Greifeinheit 6 erfolgt.

Durch diese angepasste Breite des Abgabebandes 11 einerseits wie auch der Greifeinheit 6 andererseits wird bei Rotation des Abgabekopfes 9 das Produkt P von den Produktaufnahmeabschnitte 10a, 10b des Mitnehmers abgehoben und verbleibt zur Abförderung auf dem Abgabeband 11, während sich nunmehr der Mitnehmer 10 in Uhrzeigerrichtung mit dem Abgabekopf 9 sowie ggf. unter eigener beschleunigter Schwenkbewegung, weiterdreht, um später ein neues, verpacktes Produkt P₁ aus der Greifeinheit 6 zu entnehmen.

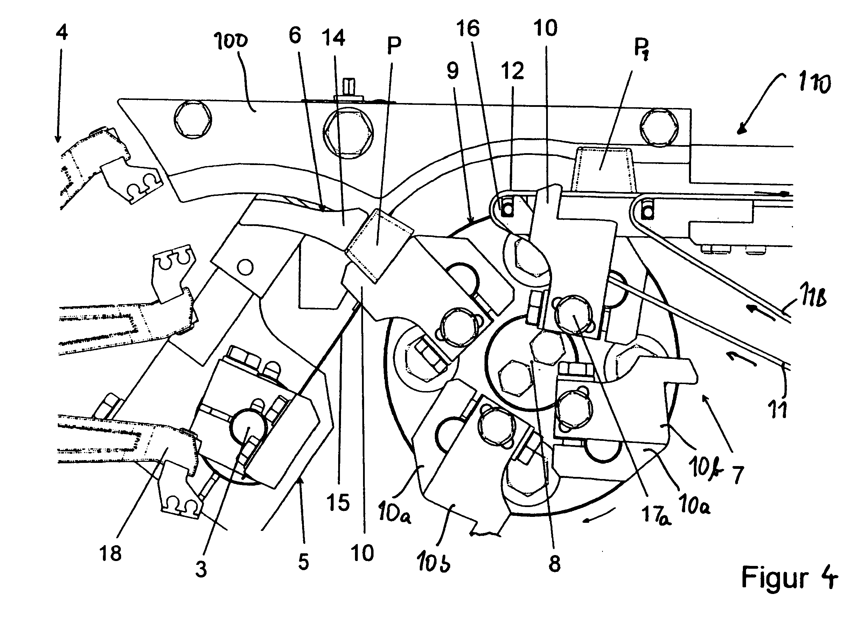

Dieser Zustand ist in Figur 4 dargestellt, in dem gerade ein Mitnehmer 10 ein verpacktes Produkt P von der Greifeinheit 6 übernimmt, die das Produkt P zwischen dem starren, L-förmigen Entnahmehebel 14 und dem flexiblen, als Federzunge ausgebildeten Entnahmehebel 15 hält. Zur Produktaufnahme schließen die Produktaufnahmeabschnitt 10a, 10b des Mitnehmers sandwichartig die Greifeinheit 6 ein und das Produkt wird sanft in die winkelförmigen Abschnitte des Mitnehmers 10 aufgenommen und vermöge der Drehung des Abgabekopfes 9 in Uhrzeigerrichtung weitertransportiert.

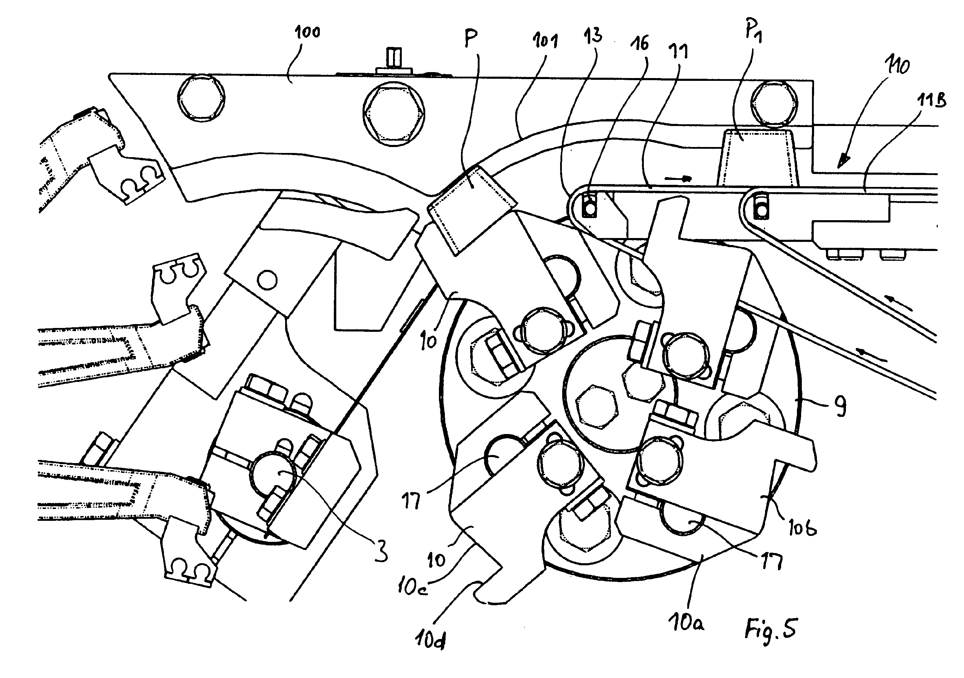

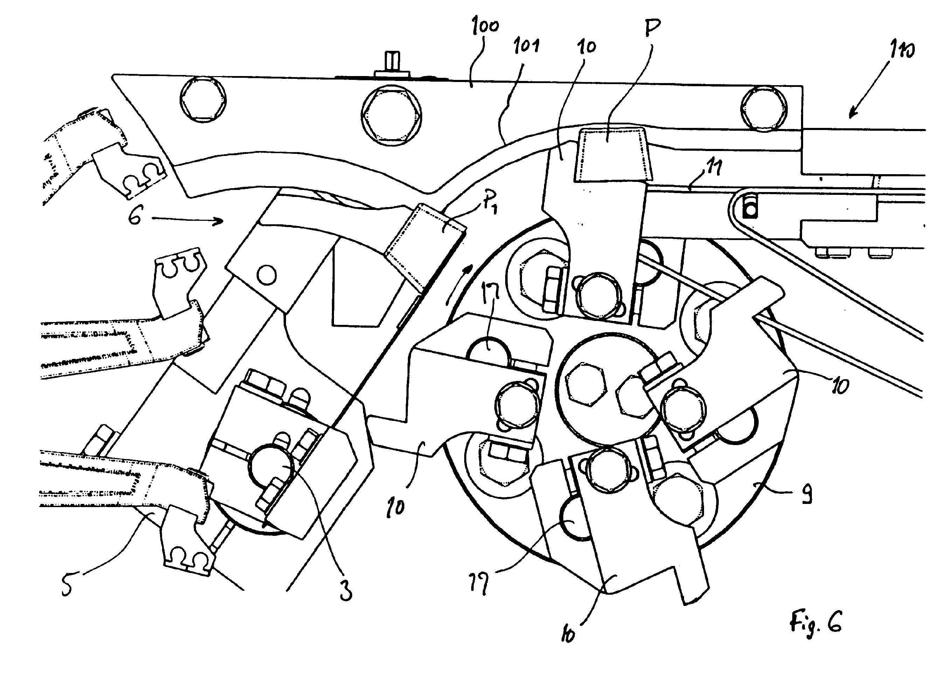

Die Figuren 5 und 6 zeigen den weiteren Bewegungsablauf unter oberseitiger Führung durch einen oberseitigen Einlaufbügel 100, der den Bewegungsweg des Produktes P begleitet und für eine zusätzliche Sicherung der Lagerung des Produktes in den abgewinkelten Produktaufnahmeabschnitten 10a, 10b des Mitnehmers 10 sorgt. In der Abbildung von Figur 5 ist das Produkt gerade am Beginn eines durch den oberen Einlaufbügel gebildeten Führungsbahnabschnittes 101. Zugleich befindet sich das vorher übergebene Produkt P₁ bereits in der Abförderung auf dem Abgabeband 11 und erreicht gerade den Abschnitt, in dem die volle Breite der dreiteiligen Bandfördereinrichtung 110 für die Abstützung des Produktes P1 zur Verfügung steht. Die angegebenen Pfeile bezeichnen die Laufrichtung des Bandes 11A, 11B sowie des Abgabebandes 11 der Bandfördereinrichtung 110, das Band 11A ist nicht sichtbar.

Figur 6 verdeutlicht die 12-Uhr-Position, d.h. den höchsten Punkt des Produktes P mit entsprechendem Abstand seiner Bodenfläche von seiner Oberseite des Abgabebandes 11. Zugleich steht zwischenzeitlich durch die Greifeinheit 6 ein neues, aus dem Packkopf 4 entnommenes Produkt P zur Übergabe an einen nächstfolgenden Mitnehmer 10 des Abgabekopfes bereit.

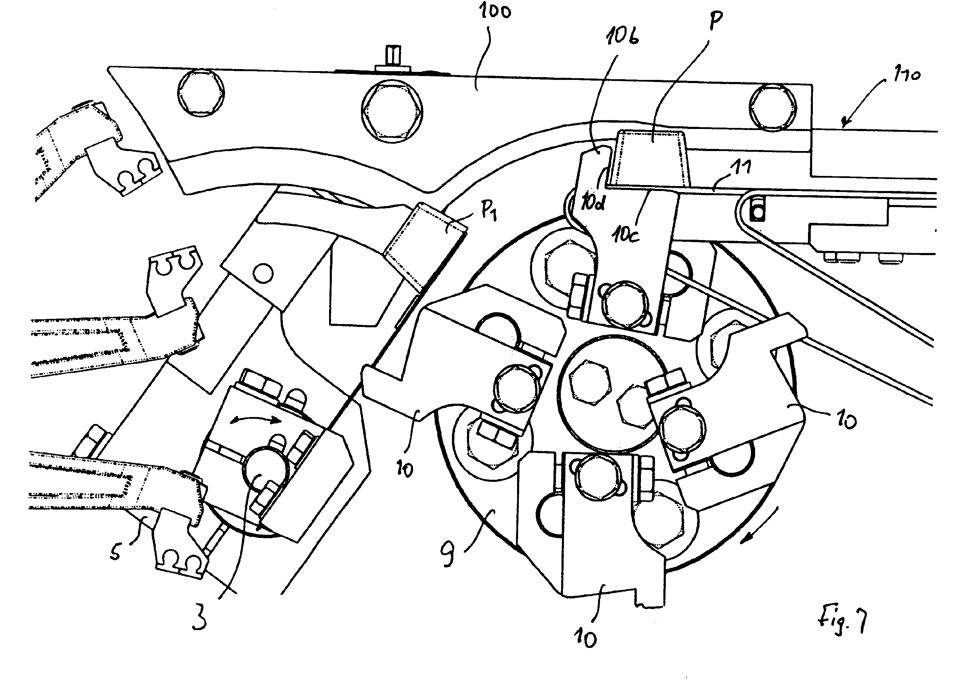

Figur 7 zeigt in Übereinstimmung mit Figur 3, die den Beginn für die Beschreibung des Verfahrenszyklus bildete, dass durch Schwenkbewegung des Mitnehmers 10 einerseits und sogleich Rotationsbewegung des Abgabekopfes 9 erreichte Bewegungsmuster des Mitnehmers 10 vorbei beiderseits an dem Abgabeband 11 unter Absetzen des Produktes P auf dem Abgabeband 11.

Dabei ist eine Horizontalgeschwindigkeit des Mitnehmers 10 im Wesentlichen gleich der Bandgeschwindigkeit des Abgabebandes 11, so dass eine extrem schonende und reibungsarme Übergabe des Produktes P von dem Mitnehmer 10 auf das Abgabeband 11 geschieht. Zugleich führt dieses Bewegungsmuster des Mitnehmers 10, das einerseits der Steuerung seiner Schwenkbewegung, andererseits der Rotation des Abgabekopfes 9 geschuldet ist, dazu, dass sich auch an der in Förderrichtung Rückseite des Produktes P der Mitnehmer 10 vollflächig und allseitig gleichzeitig mit dem Absetzen des Produktes P auf dem Abgabeband 11 von einem Kontakt mit der Rückseite des Produktes P löst, so dass dem Produkt auch kein aus der Bewegung des Mitnehmers resultierendes Druckmoment oder Übergabeimpuls verliehen wird, so dass das Produkt tatsächlich praktisch frei von äußeren Zwangsmomenten auf dem Abgabeband 11 abgelegt wird.

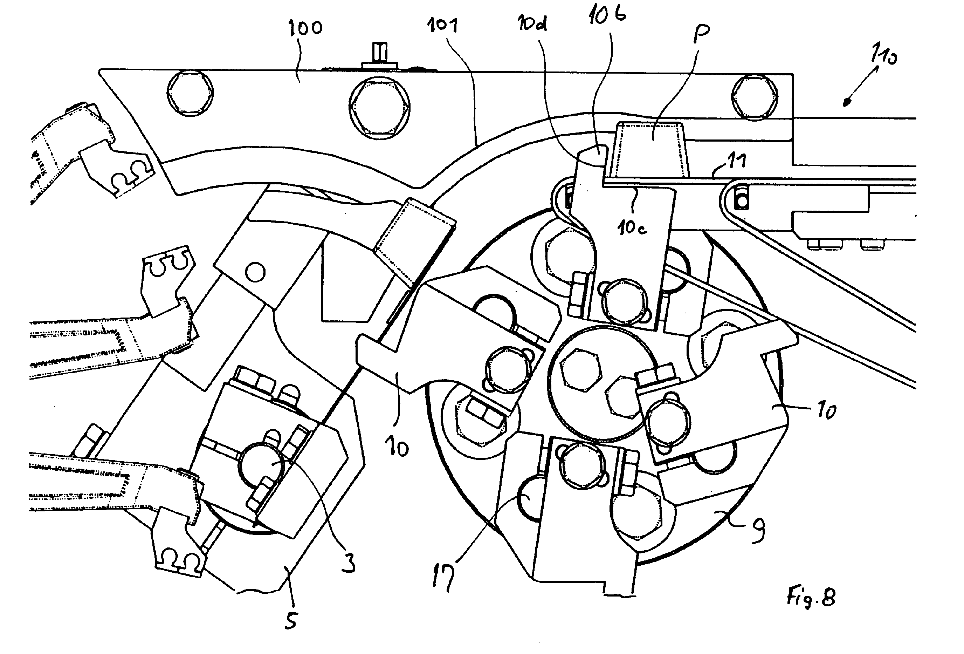

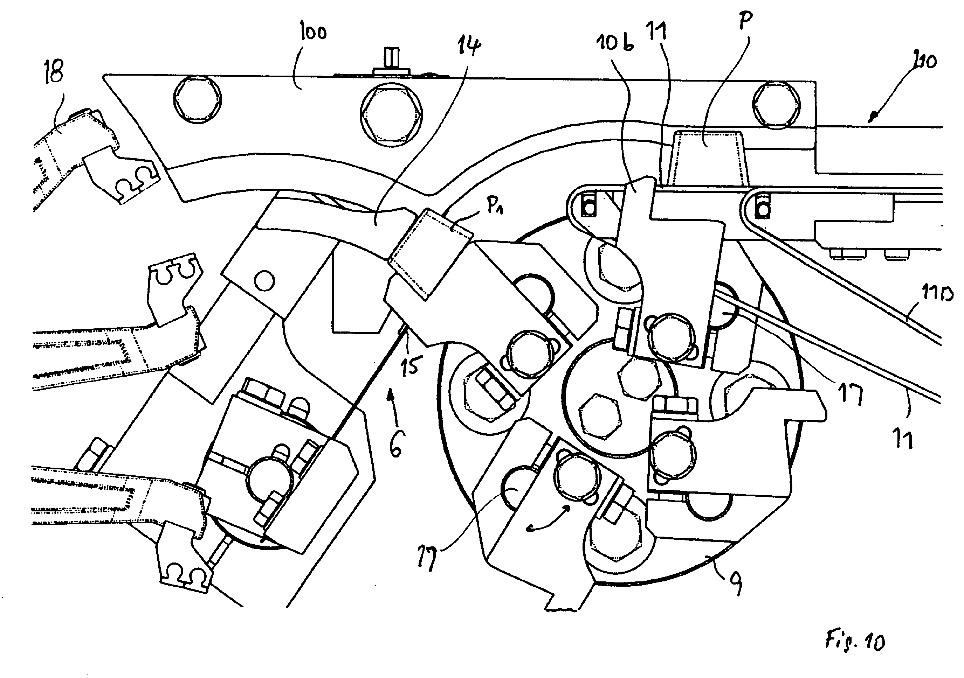

Diese schonende Produktübergabe verdeutlichen nochmals die nachfolgenden Figuren 8 bis 10, die zeigen, wie tatsächlich aufgrund der Schwenkbewegungsteuerung des Mitnehmers 10 gleichzeitig und allseitig der Kontakt zwischen Mitnehmer 10 und Produkt P beendet wird und keinerlei aus dem Übergabevorgang resultierende Momente auf das Produkt übertragen werden.

Aufgrund der "bis in oder über die 12-Uhr-Position" reichenden "Messerkanten"-Konstruktion des in den Abgabekopf 9 hineinragenden Abgabebandes 11 ist es auch möglich, die Bandgeschwindigkeiten von Abgabeband und Bewegungsgeschwindigkeit des Abgabekopfes bzw. der Mitnehmer 10 sehr präzise aufeinander abzustimmen, so dass sich das Produkt P beim Aufsetzen auf das Abgabeband 11 langsam von der abtauchenden Hinterkante des Mitnehmers 10 entfernt.

Ein separater Antrieb mit separater Steuerung für das Abgabeband 11 kann solange in Bewegung gesetzt bleiben, wie sich auf dem Abgabeband 11 noch Produkte befinden, so dass die Verpackungsmaschine in einfacher Weise "leergefahren" werden kann.

Die Anordnung der Umlenkrolle 16 mit der Umlenkkante 13 im Bereich des Abgabekopfes 9 nicht nur in Verbindung mit den schwenkbaren Mitnehmern 10 äußerst vorteilhaft, sondern kann auch bei anderen Übergabenprinzipien in selbständiger Weise eine vorteilhafte Kombination eines rotierenden Produkt-Trägerkopfes und eines Abnahmebandes darstellen.

Vorzugsweise sind das Abgabeband 11 (wie auch die weiteren Bänder 11A, 11 B der Bandfördereinrichtung 11) als Gurt ausgebildet, und es ist die Umlenkkante 13 durch eine Umlenkung dieses Gurtes um eine Leitrolle 16 ausgeführt. Auf diese Weise ist vorzugsweise ein Ablagebereich 12 des Abgabebandes 11 tangential zur Schwenkbewegung der Mitnehmer 10 des Abgabekopfes 9 ausgerichtet und kann auf diese Weise das Abgabeband 11 in Bezug zum Abgabekopf 9 leicht höhenverstellbar ausgeführt sein.

Vorzugsweise wird eine solche Höhenverstellung in Abhängigkeit von einer Produkthöhe des zu transportierenden Produktes P eingestellt.

Auf diese Weise ist es auch möglich, dass das Abgabeband 11 unabhängig vom Abgabekopf 9 gelagert und angetrieben ist. Die Verpackungsmaschine 1 weist also vorzugsweise eine erste und eine zweite stationäre Rotationsachse 2, 3 auf, wobei um die erste Rotationsachse 2 der Packkopf 4 drehbar ist, während um die zweite Rotationsachse 3 ein Entnahmekopf 5 der Greifeinheit 6 drehbar ist und es ist schließlich eine dritte Rotationsachse 8 vorgesehen, um die der Abgabekopf 9 drehbar ist, wobei sämtliche Rotationsachsen 2, 3 und 8 im Wesentlichen parallel zueinander angeordnet sind. Auch die Schwenkachse 3 der Greifeinheit 6 und die Schwenkachsen 17 des Abgabekopfes 9 verlaufen im Wesentlichen parallel zueinander.

Der Entnahmekopf 5 weist die Greifeinheit 6 auf, durch die die kleinstückigen Artikel P aus dem Packkopf 4 entnehmbar und an die Entnahmeeinrichtung 7 übergebbar sind. Vorzugsweise besteht die Greifeinheit 6 aus einem starren und einen federnden Entnahmehebel 14, 15, wobei diese zur Übergabe des Produktes P an den Abgabekopf 9 zwischen den Produktaufnahmeabschnitten 10a, 10b des Mitnehmers 10 des Abgabekopfes 9 aufnehmbar sind.

Drehgeschwindigkeit des Abgabekopfes 9 und Laufgeschwindigkeit des Abgabebandes 11 bzw. aller Bänder der Bandfördereinrichtung 110 können in vorteilhafter und einfacher Weise zueinander synchronisiert werden.

Überdies kann auch aufgrund der Schwenklagerung der Mitnehmer 10 am Abgabekopf 9 die Greifeinheit 6 mit dem vorzugsweise gefedert ausgeführten Entnahmehebel 15 zur Produktübergabe an den Abgabekopf 9 weiter als üblich zur Rotationsachse 8 des Abgabekopfes hin verschwenkt, d.h. die Bereitstellungsposition in größerer Nähe zum Abgabekopf 9 realisiert werden, um damit einerseits das Produkt P sicher freizugeben und ebenfalls äußerst schonend an den Abgabekopf 9 (die schwenkbaren Mitnehmer 10) zu übergeben.

Der Einsatz einer Leitrolle 16 und die Ausbildung einer Umlenkkante bzw. Messerkante 13 für das Abgabeband 11 im Bereich des Abgabekopfes 9 und die dadurch erreichte, spitzwinklige Führung des Abgabebandes unter Bildung des Ablagebereiches 12 lässt eine äußerst gedrängte Bauweise der Übergabeeinrichtung zu, die ebenfalls vorteilhaft für die Angleichung von Geschwindigkeiten und Beschleunigungen im Übergabeprozess ist.

Außerdem kann auf diese Weise das Produkt auf einen völlig geradlinigen Bereich des Abgabebandes 11 aufgelegt werden, so dass die Lagesicherheit der Produkte, die auf dem Ablageband 11 abgelegt sind, erhöht wird.

Die Erfindung ist bevorzugt für intermittierende Maschinen entwickelt worden, ohne hierauf beschränkt zu sein. Das heißt, es ist in gleicher Weise möglich, die Bereitschaftsposition, in der die Produkte aus dem Packkopf durch die Greifeinheit 6 zur Übergabe an den Abgabekopf 9 bereitgehalten werden, ortsbeweglich auszuführen und das Übergabeprinzip zur Aufnahme der Produkte in den Abgabekopf 9 mit Hilfe der schwenkbaren Mitnehmer 10 wie auch das Übergabeprinzip auf das Abgabeband 11 mit Hilfe der schwenkbaren Mitnehmer 10 unter Einsatz einer Umlenkkante für das Abgabeband 11 im Bereich kontinuierlich arbeitender Verpackungsmaschinen zu realisieren.

Es versteht sich überdies, dass die Vorteile der erfindungsgemäßen Entnahmeeinrichtung 7 auch bei anderen Verpackungsmaschinen Anwendung finden können und nicht auf Süßwarenprodukte o. dgl. kleinstückige Produkte beschränkt ist.

## Patentansprüche

1. Verfahren zur Übergabe von kleinstückigen Produkten (P, P₁), insbesondere kleinstückiger Süßwaren, auf eine Bandfördereinrichtung (115), insbesondere für eine Produktabgabe, wobei die Produkte (P, P₁) einem Abgabekopf (9) zugefördert werden, durch schwenkbeweglich an dem Abgabekopf (9) vorgesehene Mitnehmer (10) aufgenommen und an die Bandfördereinrichtung (110) übergeben werden, wobei die Mitnehmer (10) aufgrund ihrer Schwenkbeweglichkeit eine im wesentlichen impulsfreie Übergabe des Produktes (P, P₁) an die Bandfördereinrichtung (110) vornehmen.

2. Verfahren nach Anspruch 1, **dadurch gekennzeichnet, dass** die Produkte (P, P1, P2) durch verschwenkbare Lagerung und Absenkung der Mitnehmer (10) auf der Bandfördereinrichtung (110) abgelegt werden, wobei sich die Mitnehmer (10) allseits im wesentlichen gleichzeitig aus einem Kontakt mit dem Produkt (P, P₁) lösen.

3. Verfahren nach Anspruch 1 oder 2, **dadurch gekennzeichnet, dass** das Produkt (P, P1, P2) aus einer Breitstellungsposition durch Anlagekontakt der schwenkbaren Mitnehmer (10) am Abgabekopf (9) aufgenommen und von einem Ort oberhalb der Bandfördereinrichtung (110) auf die Bandfördereinrichtung (110) abgesenkt wird, wobei im Übergabezeitpunkt des Produktes (P, P₁) an die Bandfördereinrichtung (110) eine Horizontalgeschwindigkeit des Mitnehmers (10) im wesentlichen derjenigen der Bandfördereinrichtung (110) entspricht.

4. Verfahren nach Anspruch 3, **dadurch gekennzeichnet, dass** nach der Übergabe des Produktes (P, P₁) an die Bandfördereinrichtung (110) eine Horizontalgeschwindigkeit der Mitnehmer (10) geringer ist, als eine Bandgeschwindigkeit der Bandfördereinrichtung (110).

5. Entnahmeeinrichtung für kleinstückige Produkte, insbesondere stromab eines Packkopfes (9), einer Verpackungsmaschine, mit einem um eine stationäre Rotationsachse (8) drehbaren Abgabekopf (9), mit einer Mehrzahl von Mitnehmern (10) und einer Bandfördereinrichtung (110), insbesondere zur Durchführung des Verfahrens nach einem der Ansprüche 1 bis 4, wobei die Mitnehmer (10) an dem Abgabekopf (9) schwenkbar gelagert sind.

6. Entnahmeeinrichtung nach Anspruch 5, **dadurch gekennzeichnet, dass** die Mitnehmer (10) die beabstandete Produktaufnahmeabschnitte (10a, 10b) aufweisen, deren Abstand größer ist, als eine Breite eines Abgabebandes (11) der Bandfördereinrichtung (110).

7. Entnahmeeinrichtung nach Anspruch 6, **dadurch gekennzeichnet, dass** die Mitnehmer (10) eine U-förmige Konfiguration aufweisen, deren beabstandete Schenkel die Produktaufnahmeabschnitte (10a, 10b) bilden.

8. Entnahmeeinrichtung nach zumindest einem der vorhergehenden Ansprüche 5 bis 7, **dadurch gekennzeichnet, dass** die Mitnehmer (10) geteilt sind und zumindest ein Teil des Mitnehmers (10) auf einer dem Mitnehmer (10) zugehörigen Schwenkwelle (17) des Abgabekopfes (9) klemmbefestigt ist.

9. Entnahmeeinrichtung nach zumindest einem der vorhergehenden Ansprüche 5 bis 7, **dadurch gekennzeichnet, dass** die Produktaufnahmeabschnitte (10a, 10b) der Mitnehmer (10) winkelförmige Abschnitte bilden, vorzugsweise zueinander unter einem Neigungswinkel < 90° geneigt sind.

10. Entnahmeeinrichtung nach zumindest einem der vorherigen Ansprüche 5 bis 8, **dadurch gekennzeichnet, dass** ein Abgabeband (11) der Bandfördereinrichtung (110) in den Bereich des Abgabekopfes (9), insbesondere bis in den Bereich seiner 12-Uhr-Position, hineinreicht und in einer Produktübergabeposition die beabstandeten Produktaufnahmeabschnitte (10a, 10b) der Mitnehmer (10), die Bandfördereinrichtung (110) sandwichartig umgebend, beiderseits des Abgabebandes (11) angeordnet sind.

11. Entnahmeeinrichtung nach zumindest einem der vorhergehenden Ansprüche 5 bis 10, **dadurch gekennzeichnet, dass** eine Bereitstellung des Produktes (P, P₁) zwischen einer 9-Uhr-Position und einer 12-Uhr-Position der Mitnehmer (10) an dem Abgabekopf (9) vorgesehen ist und im Bereich einer Aufnahme des Produktes (P, P₁) aus der Bereitstellungsposition die Produktaufnahmeabschnitte (10a, 10b) der Mitnehmer (10) beiderseits opponierender Haltemittel (14, 15) einer Greifeinheit (6) angeordnet sind.

12. Entnahmeeinrichtung nach zumindest einem der vorhergehenden Ansprüche 5 bis 11, **dadurch gekennzeichnet, dass** ein Abgabeband (11) der Bandfördereinrichtung (110) unabhängig von dem Abgabekopf (9) gelagert und angetrieben ist.

13. Entnahmeeinrichtung nach zumindest einem der vorhergehenden Ansprüche 5 bis 12, **dadurch gekennzeichnet, dass** die Bandfördereinrichtung (110) aus einer Mehrzahl paralleler Bänder (11, 11A, 11B) besteht und das Abgabeband (11) einen Auflagebereich (12) aufweist, der stromauf von Auflagebereichen der weiteren Bänder (11A, 11B) angeordnet ist, insbesondere in den Auflagebereichen, Umlenkkanten und Leitrollen zur spitzwinkligen Umlenkung der Bänder (11, 11A, 11B) vorgesehen sind.

14. Verpackungsmaschine mit einer Entnahmeeinrichtung nach zumindest einem der vorhergehenden Ansprüche 5 bis 13.

15. Verpackungsmaschine nach Anspruch 14, **dadurch gekennzeichnet, dass** eine erste Rotationsachse (2), um die der Packkopf (4) drehbar ist, eine zweite Rotationsachse (3) um die ein Entnahmekopf (5) der Entnahmeeinheit (6) drehbar ist, eine dritte Rotationsachse (8), um die der Abgabekopf (9) drehbar ist, vorgesehen sind und diese Rotationsachsen (2, 3, 8) im Wesentlichen parallel zueinander sowie zu Schwenkachsen (17) von Mitnehmern (10) des Abgabekopfes (9) angeordnet sind.
